# EUROPÄISCHE PATENTSCHRIFT

(11) **EP 1 032 781 B1**
(45) Veröffentlichungstag und Bekanntmachung des Hinweises auf die Patenterteilung: **28.01.2004**
(21) Anmeldenummer: 98954447.3
(22) Anmeldetag: 26.10.1998
(51) Int. Cl.: F16J 1/22, B60T 11/16, F16B 21/18

(54) **ANBINDUNG EINER KOLBENSTANGE AM KOLBEN EINES GEBERZYLINDERS**
ASSEMBLING PISTON ROD AND MASTER CYLINDER PISTON
ASSEMBLAGE D'UNE TIGE DE PISTON AU PISTON D'UN MAITRE-CYLINDRE

(30) Priorität: 25.11.1997 DE 19752076
(43) Veröffentlichungstag der Anmeldung: 06.09.2000
(73) Patentinhaber: LuK Lamellen und Kupplungsbau Beteiligungs KG, 77813 Bühl (DE)
(72) Erfinder: WELTER, Roland, D-77815 Bühl (DE); SCHAAF, Peter, D-91413 Neustadt (DE); GIESE, Peter, D-91074 Herzogenaurach (DE); WINKELMANN, Ludwig, D-91056 Erlangen (DE); MEYER, Gerhard, D-91611 Lehrberg (DE)
(86) Internationale Anmeldenummer: PCT/EP1998/006782
(87) Internationale Veröffentlichungsnummer: WO 1999/027279

(56) Entgegenhaltungen:
- EP-A- 0 270 285
- DE-A- 19 608 132
- FR-A- 2 101 999
- FR-A- 2 651 838
- GB-A- 2 018 876
- US-A- 2 451 216
- US-A- 3 266 383

## Beschreibung

Die Erfindung bezieht sich auf einen Geberzylinder für Kupplungs- oder Bremssysteme von Kraftfahrzeugen, umfassend ein hohlzylindrisches Gehäuse, einen in dem Gehäuse ausgebildeten Druckraum sowie einen in dem Druckraum axial verschiebbar angeordneten Kolben, an dem ein Kugelkopf einer Kolbenstange schwenkbar befestigt ist.

### Hintergrund der Erfindung

Geberzylinder der zuvor beschriebenen Bauart sind vorzugsweise in Verbindung mit einer Pedalvorrichtung als vorkomplettierbare Baueinheit in ein Fahrzeug einsetzbar. Im eingebauten Zustand ist die Baueinheit an einer Spritzwand der Fahrgastzelle des Fahrzeugs angeordnet, wobei der Geberzylinder über eine Druckleitung mit einer im Bereich der Reibungskupplung angeordneten Ausrückvorrichtung, d. h. einem Nehmerzylinder in Verbindung steht.

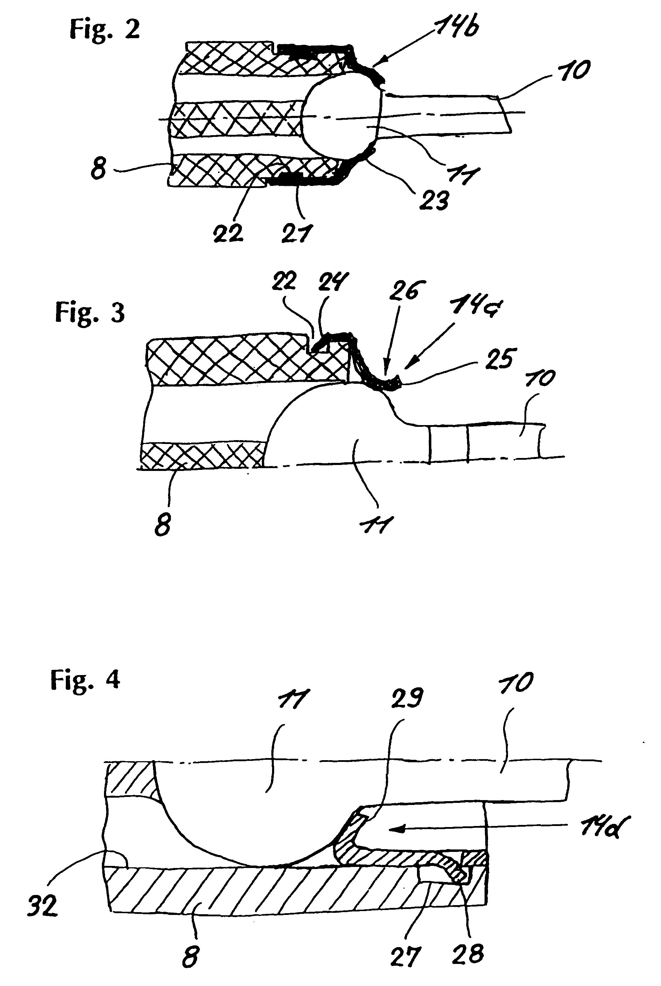

Ein gattungsgemäßer Geberzylinder ist aus der DE-196 08 132 A1 bekannt. Dieser Stand der Technik zeigt einen Geberzylinder, der ein Kunststoffgehäuse umfaßt, in dem ein ebenfalls aus Kunststoff hergestellter Kolben geführt ist. Die endseitig einen Kugelkopf bildende Kolbenstange ist formschlüssig mit dem Kolben verbunden. Dazu weist der Kolben eine kalottenförmige Aufnahme auf, die der Kugelform der Kolbenstange angepaßt ist, wie in Figur 3a gezeigt. Als Maßnahme zur vereinfachten Montage ist der Endbereich des Kolbens beispielsweise in Axialrichtung geschlitzt. Die sich dabei bildenden Zungen erleichtern bei der Montage ein Einschnappen der Kolbenstange in die Kolbenkalotte. Zur Lagesicherung der Zungen ist der geschlitzte Bereich des Kolbens von einer Hülse umgeben. Eine derartige Schnappverbindung erfordert einen hochelastischen Kunststoff, vorzugsweise ein Thermoplast, der eine Zwangsentformung im Bereich der Kalotte sowie ein radiales Ausweichen der Zungen im geschlitzten Bereich während der Montage der Kolbenstange in den Kolben ermöglicht. Ein Thermoplast besitzt eine relativ hohe Temperaturdehnung, was sich nachteilig auf die Formstabilität des Kolbens auswirkt und zu einer Beeinträchtigung der Betriebssicherheit des Geberzylinders führen kann. Eine nach dem Stand der Technik ausgebildete Kolbenstangenanlenkung am Kolben erfüllt damit nicht die Anforderungen an heutige Kraftfahrzeug-Komponenten für Kupplungs- und Bremssysteme.

Die US 3,266,383 offenbart einen Kolben für einen Geberzylinder, in dem eine Kolbenstange mit Kugel kopf verschwenkbar aufgenommen und mittels eines in einem Innenumfang der Aufnahmeöffnung für die Kolbenstange verspannten Halteglieds axial fixiert ist.

### Aufgabe der Ertindung

Die vorliegende Erfindung hat die Aufgabe, eine unabhängig von der Winkellage der Kolbenstange wirksame und zuverlässige Befestigung der Kolbenstange am Kolben zu schaffen, die kostengünstig herstellbar ist und eine einfache Montage ermöglicht.

### Zusammenfassung der Erfindung

Die Lösung der Erfindung ist erreichbar mit den im kennzeichnenden Teil des Anspruchs 1 angegebenen Merkmalen. Erfindungsgemäß ist als Kunststoff für den Kolben ein Thermoplast oder ein Duroplast vorgesehen, vorzugsweise ein Phenolharz, das mit geeigneten Füllstoffen versetzt, nahezu die Festigkeit von Aluminium erreicht. Der hochfeste, im Vergleich zum bekannten Stand der Technik keine Zwangsentformung zulassende Kunststoff besitzt weiterhin eine hohe Verschleißfestigkeit, wodurch sich die Betriebssicherheit des Geberzylinders erhöht. Zur Anlenkung der Kolbenstange am Kolben ist diese an einem Halbkugelabschnitt im Kolben abgestützt. Zur Sicherung dient ein Halteglied, durch das die Kolbenstange geführt ist und das die Kolbenstange umschließt, wobei das Halteglied formschlüssig am Kolben verschnappt ist. Das nach den Gesichtspunkten einer kostengünstigen Herstellung ausgelegte Halteglied kann vorteilhaft in einem Montageprozeß gemeinsam mit der Kolbenstange in den Kolben eingeführt werden. Zur Schaffung einer spielfreien Anbindung bzw. Anlenkung der Kolbenstange im Kolben ist das Halteglied so gestaltet, daß dieses in der Einbaulage eine Haltekraft, vorzugsweise eine Axialkraft auf den Kugelkopf der Kolbenstange ausübt. Das zur Herstellung des Kolbens vorgesehene Spritzgießverfahren erfordert keinerlei spanende Nacharbeit am Kolben, weder an Mantelfläche noch an dem kalottenartigen Abschnitt zur Aufnahme der Kolbenstange.

Weitere vorteilhafte Ausgestaltungen der Erfindung sind Gegenstand der abhängigen Ansprüche 2 - 13.

Gemäß einer vorteilhaften Ausgestaltung der Erfindung ist als Halteglied ein Blechgehäuse vorgesehen, dessen zentrischer Bereich eine Öffnung für die Kolbenstange aufweist. An die Öffnung schließt sich eine Kugelzone an, die den teilweise stirnseitig aus dem Kolben austretenden Kugelkopf der Kolbenstange bereichsweise umschließt. Umfangsseitig ist das Blechgehäuse rechtwinkelig abgekantet und bildet einen umlaufenden Axialabschnitt, der eine Endzone des Kolbens umschließt und formschlüssig daran befestigt ist.

In Ausgestaltung des zuvor beschriebenen Haltemittels können derartige Blechgehäuse unter Bildung symmetrisch angeordneter Zungen im Bereich der zentrischen Öffnung geschlitzt gestaltet sein, wodurch eine vereinfachte Montage des Kugelkopfes der Kolbenstange ermöglicht wird. An den Kugelabschnitt schließt sich eine in Richtung der Kolbenstange ausgerichtete nach außen offene, umlaufende nahezu halbkreisförmige Einführzone an. Dieser Blechring ist für die Montagefolge der einzelnen Bauteile des Geberzylinders gedacht, bei dem zunächst der Kolben in das Gehäuse eingesetzt und anschließend das Haltemittel am Gehäuse des Geberzylinders montiert wird, bevor der Kugelkopf der Kolbenstange in den Kolben axial einführbar ist. Bedingt durch die geschlitzte, halbkreisförmig geformte Einführzone des Blechgehäuses bewirkt der Kugelkopf der Kolbenstange während der Montage ein radiales Auslenken bzw. Ausweichen der Zungen, die im eingebauten Zustand der Kolbenstange kraftschlüssig am Kolbenkopf abgestützt sind.

Weiterhin schließt die Erfindung ein spanlos aus Blech geformtes, topfförmiges Halteglied ein, das einen endseitigen Abschnitt des Kolbens umgreift. Ein Boden des Haltegliedes stützt sich dabei stirnseitig am Kolben ab, der eine zentrische Ausnehmung für die Kolbenstange aufweist. Außen schließt sich am Boden ein geschlossener oder mit Ausnehmungen bzw. Schlitzen versehener Axialabschnitt an. Zur formschlüssigen Befestigung des Haltegliedes sind am Axialabschnitt angeordnete, in eine Radialnut des Kolbens eingreifende Rastnasen vorgesehen. Zur Positionierung des vollständig im Kolben eingesetzten Kugelkopfes der Kolbenstange ist eine Führungshülse vorgesehen, die einen axialen Abstand zwischen dem Boden des Haltegliedes und dem Kolbenkopf überbrückt.

Die Erfindung schließt ebenfalls ein aus Draht zu einer Formfeder gestaltetes Halteglied ein. Diese Formfeder besitzt dabei zwei parallele Abschnitte, die sich über die Stirnseite des Kolbens erstrecken und im Bereich der Mantelfläche des Kolbens zusammengeführt und dabei rechtwinklig in Richtung des Kolbens zeigend abgekantet sind. Mit dem abgekanteten, das Kolbenende umgreifenden Abschnitt ist die Formfeder an radialen Ansätzen des Kolbens verschnappt. Diese kostengünstig herstellbare Formfeder stellt ein einfach zu handhabendes wirksames Haltemittel dar.

Eine alternative Ausgestaltung zu der zuvor erläuterten Formfeder sieht eine in einer U-Form gestaltete Form- oder Schnappfeder vor. Zur Montage wird die zwei Schenkel umfassende Feder radial in den Kolben eingeführt, wobei deren Schenkel in der Endlage in versetzt zur Kolbenmitte in den Kolben eingebrachte Bohrungen eingreifen. Eine derartige Schnappfeder, die vorzugsweise aus Draht geformt ist, kann beispielsweise an den Schenkelenden mit Rastnasen versehen sein, mit denen die Feder positionierbar ist.

Als eine weitere Maßnahme zur Erzielung eines vergrößerten Kontaktbereichs zwischen der Formfeder und dem Kugelkopf der Kolbenstange sind erfindungsgemäß die Schenkel der Formfeder nach außen bauchig gestaltet. Damit ergibt sich bei eingesetzter Formfeder anstelle einer Punktberührung ein verlängerter einem Kreisbogen entsprechender Kontaktbereich, mit dem die Schenkel am Kugelkopf der Kolbenstange anliegen. Diese Maßnahme verringert die Flächenpressung zwischen der Formfeder und dem Kugelkopf, was den Verschleiß vorteilhaft verringert.

Weiterhin umfaßt die Erfindung ein als Blechhülse gestaltetes Halteglied, das vollständig in die zentrale Kolbenbohrung eingesetzt ist. Das Halteglied bildet eine als kreisringförmige Anlagefläche gestaltete Kröpfung, an der sich der Kolbenkopf der Kolbenstange abstützt. In der Einbaulage ist die Blechhülse über zumindest eine Rastnase in einer Radialnut oder Ausnehmung des Kolbens gehalten. Dieses Halteelement nimmt dabei keinen Einfluß auf die Gestaltung der Stirn- oder Mantelfläche des Kolbens und beeinflußt damit nicht die Kolbenführung.

Es ist außerdem von Vorteil, das Halteglied als Haltescheibe auszubilden, die stirnseitig am Kolben anliegt und über umfangsverteilt angeordnete, axial ausgerichtete Zapfen verfügt, die in entsprechende stirnseitige Ausnehmungen des Kolbens befestigt sind. Radial nach innen versetzt zu den Zapfen verfügt die Haltescheibe über einen axialen Führungsansatz, der an der Kolbenbohrung zentriert ist und sich endseitig am Kolbenkopf abstützt.

Zur Vermeidung einer unmittelbaren Anlage des Haltegliedes am Kugelkopf der Kolbenstange kann erfindungsgemäß dem Halteglied ein Zwischenring, eine Paßhülse oder eine Anschlagscheibe vorangestellt sein. Dieses Zusatzbauteil ist dabei mit einem der Gestaltung des Kugelkopfs angepaßten Kontaktbereich versehen. Ein solches aus Kunststoff geformtes Bauteil ist vorteilhaft kombinierbar mit einem aus Kunststoff hergestellten Kolben und einer entsprechenden Kolbenstange, zur Erreichung einer verschleißmindernden gleichen Werkstoffpaarung für die sich bewegenden Bauteile. Dabei bietet es sich an, zur Erzielung einer spielfreien Anordnung der Kolbenstange im Kolben, das Zusatzbauteil, d. h. den Zwischenring vorgespannt einzusetzen. Dazu kann beispielsweise der Zwischenring mit einem gewissen vergrößerten Längenmaß versehen sein. Ein solcher Zwischenring wird in der Einbaulage von dem Halteglied unter Aufbringung einer Axialkraft gegen den Kugelkopf der Kolbenstange gepreßt.

Die Ausgestaltung der Erfindung schließt weiterhin als Halteglied eine vorzugsweise aus Kunststoff hergestellte, am Kolben stirnseitig befestigte Scheibe ein. Diese Scheibe ist umfangsseitig mit symmetrisch verteilt, axial vorspringenden Zungen oder Vorsprüngen versehen, an denen jeweils endseitig eine radial nach innen gerichtete Rastnase angeordnet ist, die in eine Radialnut der Mantelfläche des Kolbens verrasten. Weiterhin weist die Scheibe eine mittige Ausnehmung auf, deren Randzone der Kugelform des Kolbenstangenkopfes angepaßt ist. Von der Ausnehmung ausgehend schließt sich eine Aussparung an, die bis zu zwei gegenüberliegenden Zungen reicht, die eine Vormontage der Scheibe auf die Kolbenstange ermöglicht. Aufgrund der Aussparung bildet die Scheibe Scheibenhälften, die bei der Montage des Kugelkopfes aufklappen. In der Einbaulage ist die Scheibe über umfangsverteilte Rastnasen, die in eine Radialnut verrasten, am Kolben befestigt. Dieses Halteglied ermöglicht weiterhin eine ungerichtete Montage, die insbesondere für automatisierte Montageabläufe Kostenvorteile bietet.

Als weitere Maßnahme zur Befestigung der Kolbenstange am Kolben ist erfindungsgemäß in dem zentrischen Stempel des Kolbens eine Spannhülse eingepreßt, in der eine die Funktion eines Biegestabes ausübende Speiche verliergesichert gehalten ist. Das aus der Spannhülse ragende Ende der Speiche ist im Kugelkopf der Kolbenstange befestigt, wobei der Speiche im Eintrittsbereich des Kugelkopfes ein Freiraum zugeordnet ist, zur Erzielung einer Verschwenkbarkeit der Kolbenstange. Das als Speiche ausgebildete Halteglied ermöglicht eine geradlinige, mit der Längsachse des Kolbens übereinstimmende Ausrichtung der Kolbenstange, die sich für die Geberzylindermontage als vorteilhaft erweist. Zur Bauteiloptimierung umfaßt die Erfindung ebenfalls eine Speiche, die einstückig mit der Kolbenstange verbunden ist.

Die Ausgestaltung der Erfindung schließt weiterhin ein, die Mantelfläche des Kolbens an dem zur Kolbenstange gerichteten Endbereich radial abzusetzen. Diese Maßnahme ermöglicht, daß die den Kolben begrenzt umgreifenden Befestigungsmittel zur Lagefixierung des Haltegliedes am Kolben in der Einbaulage die Außenkontur des Kolbens nicht überschreiten. Die Radialnuten bzw. Ausnehmungen im Kolben, die z. B. zur Aufnahme von Rastnasen dienen, sind dabei ebenfalls im abgesetzten Bereich angeordnet.

### Kurze Beschreibung der Zeichnungen

Nachfolgend wird die Erfindung anhand von mehreren Ausführungsbeispielen dargestellt und nachstehend näher erläutert. Die in den Figuren 4, 7-10 und 13 dargestellte Ausführungen sind nicht Ausführungsbeispiele der Erfindung, sondern Beispiele, die das Verständnis der Erfindung erleichtern. Es zeigen:
- Figur 1: einen Geberzylinder, dessen Kolbenstange über ein erfindungsgemäßes Halteglied am Kolben befestigt ist;
- Figur 1a: in einem vergrößertem Maßstab die Einzelheit "Z" von Figur 1, die eine Drahtspange in einem vergrößerten Maßstab zeigt;
- Figur 2: den Ausschnitt eines Kolbens, an dem die Kolbenstange über ein an der Kolbenmantelfläche verschnapptes Halteglied befestigt ist;
- Figur 3: eine Alternative zu dem in Figur 2 dargestellten Halteglied;
- Figur 4: ein in der Längsbohrung des Kolbens eingesetztes Halteglied;
- Figur 5: die Ausbildung eines topfartig gestalteten Haltegliedes, das einen Endabschnitt des Kolbens umgreift;
- Figur 6: eine Alternative zu Figur 5;
- Figur 7: die Anordnung eines stirnseitig am Kolben befestigten Haltegliedes, das über einen axialen Hülsenabschnitt am Kugelkopf anliegt;
- Figur 8: einen Geberzylinderkolben, der als Halteglied eine radial in den Kolben eingeführte Formfeder aufweist;
- Figur 9: die Schnittdarstellung entlang der Linie IX-IX gemäß Figur 8;
- Figur 10: einen Geberzylinderkolben, dessen Halteglied als Drahtspange gestaltet ist, die eine Axialkraft auf einen am Kolbenkopf anliegenden Zwischenring ausübt;
- Figur 11: die Vorderansicht eines Haltegliedes aus Kunststoff;
- Figur 12: das in Figur 11 abgebildete Halteglied im eingebauten Zustand;
- Figur 13: als Halteglied eine Speiche, die zentrisch im Kolben und in dem Kolbenkopf befestigt ist;
- Figur 14: den Aufbau eines Geberzylinderkolbens aus Kunststoff;
- Figur 15: eine alternative Gestaltung zu dem in Figur 14 abgebildeten Kolben.

### Ausführliche Beschreibung der Zeichnungen

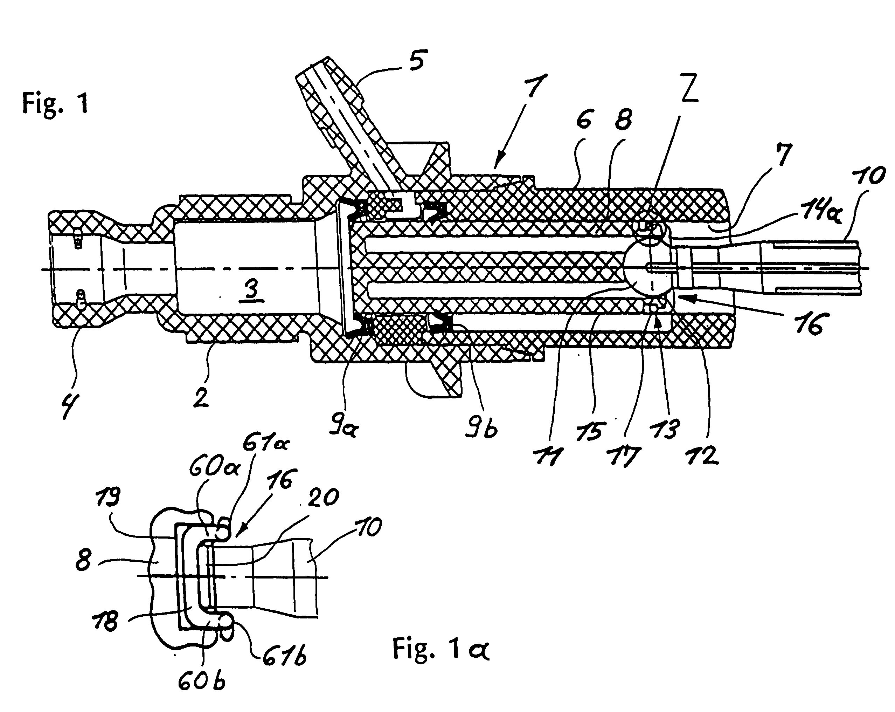

In der Figur 1 ist ein Geberzylinder 1 im Längsschnitt abgebildet. Der aus Kunststoff hergestellte Geberzylinder 1 umfaßt ein erstes Gehäuse 2, das einen Druckraum 3 umschließt, welches über einen Druckanschluß 4 sowie über einen Leitungsstutzen 5 verfügt. Der Druckanschluß 4 ist im eingebauten Zustand über eine in Figur 1 nicht abgebildete Druckleitung mit einer Ausrückvorrichtung an der Reibungskupplung verbunden. Über den Leitungsstutzen 5 kann bei Bedarf Druckmittel von einem Vorratsbehälter drucklos in den Druckraum 3 nachströmen, sobald der sich im Druckraum 3 einstellende Druck kleiner ist als der Druck im Vorratsbehälter. An dem vom Druckanschluß 4 abgewandten Ende des Gehäuses 2 ist in einem aufgeweiteten zylindrischen Abschnitt das Gehäuse 6 eingesetzt, wobei diese Gehäuse 2, 6 vorzugsweise durch eine Ultraschallschweißung oder durch eine Klebung unlösbar verbunden sind. Eine Längsbohrung 7 des Gehäuses 6 dient zur Führung des Kolbens 8, der bei einer Betätigung des Geberzylinders 1 axial verschiebbar ist. Zur Abdichtung des Druckraums 3 dienen zwei axial versetzte Nutringdichtungen 9a, 9b. Am Kolben 8 ist auf der vom Druckraum 3 abgewandten Seite eine Kolbenstange 10 gelenkig befestigt. Dazu besitzt die Kolbenstange 10 endseitig einen Kugelkopf 11, der sich an einer vorzugsweise kalottenartigen Aufnahme 12 des Kolbens 8 abstützt und dabei eine Anlenkung 13 bildet. Zur Sicherung der Kolbenstange 10 am Kolben 8 dient ein Halteglied 14a, welches als eine Drahtspange 17 gestaltet ist, die auch als Formfeder zu bezeichnen ist. Die Drahtspange 17 bildet zwei der Kugelkontur angepaßte an der Stirnseite des Kolbens 8 anliegende Abschnitte 61a, 61b, deren Endabschnitte 60a, 60b im Bereich der Kolbenmantelfläche 15 rechtwinklig in Richtung des Kolbens 8 zeigend abgekantet und über einen Steg 18, siehe Figur 1a, zusammengeführt sind. An den Abschnitten 61a, 61b ist der Kugelkopf 11 abgestützt. Die der Kugelform angepaßten Abschnitte reduzieren aufgrund der Linienberührung den Verschleiß an den Anlagebereichen.

Die Figur 1a verdeutlicht aufgrund der vergrößerten Abbildung eine Schnappverbindung 16, mit der die Drahtspange 17 am Kolben 8 formschlüssig gehalten ist. In der Einbaulage greift die Drahtspange 17 über die abgewinkelten Endabschnitte 60a, 60b in eine Ausnehmung 19 des Kolbens 8 ein. Dabei übergreift der Steg 18 einen radialen Ansatz 20 des Kolbens 8 zur Bildung der Schnappverbindung 16.

In Figur 2 ist das Halteglied 14b abgebildet, das ein Blechgehäuse darstellt, weiches einen radial abgesetzten Endbereich des Kolbens 8 umschließt und mit einer Wulst 21 in eine Radialnut 22 des Kolbens 8 formschlüssig eingreift. Das Halteglied 14b verfügt weiterhin über einen radial ausgerichteten Abschnitt, der stirnseitig am Kolben 8 abgestützt ist, und an den sich ein weitestgehend axial vorstehender Bereich 23 anschließt, der innen der Formgebung des Kugelkopfes 11 angepaßt ist und an diesem unter einer Vorspannung anliegt zur Erzielung einer spielfreien Anlage der Kolbenstange 10 am Kolben 8.

Das Halteglied 14c gemäß Figur 3 ist mit einer Bördelung 24 am freien Ende eines äußeren Axialabschnitts in der Radialnut 22 des Kolbens 8 lagefixiert. Das ebenfalls spanlos aus Blech durch ein Tiefziehverfahren hergestellte Halteglied 14c ist gleichfalls an der Stirnseite über einen Radialabschnitt am Kolben 8 abgestützt und besitzt eine mit dem Halteglied 14b (Figur 2) weitestgehend übereinstimmende Ausgestaltung. Unterschiedlich schließt sich an das in Richtung der Kolbenstange 10 ausgerichtete freie Ende vom Halteglied 14c ein radial nach außen gerichteter Bord 25 an, der eine nahezu halbrundförmig gestaltete Einführzone 26 bildet. Diese Gestaltung des Haltegliedes 14c erleichtert die Kolbenstangenmontage bei einem axialen Zuführen der Kolbenstange 10 in den Kolben 8. Die Wirkung der Einführzone 26 unterstützend kann diese mit einem oder mit mehreren Längsschlitzen versehen werden, wodurch ein radiales Ausweichen des Bordes 25 verbessert wird.

Das Halteglied 14d gemäß Figur 4 stellt ebenfalls ein aus Blech hergestelltes Bauteil dar, welches über eine Rastnase 28 in eine in die Innenwandung des Kolbens 8 eingebrachte Radialnut 27 formschlüssig verrastet. An dem von der Rastnase 28 abgewandten Ende bildet das Halteglied 14d eine Kröpfung 29, an die sich der Kugelkopf 11 abstützt.

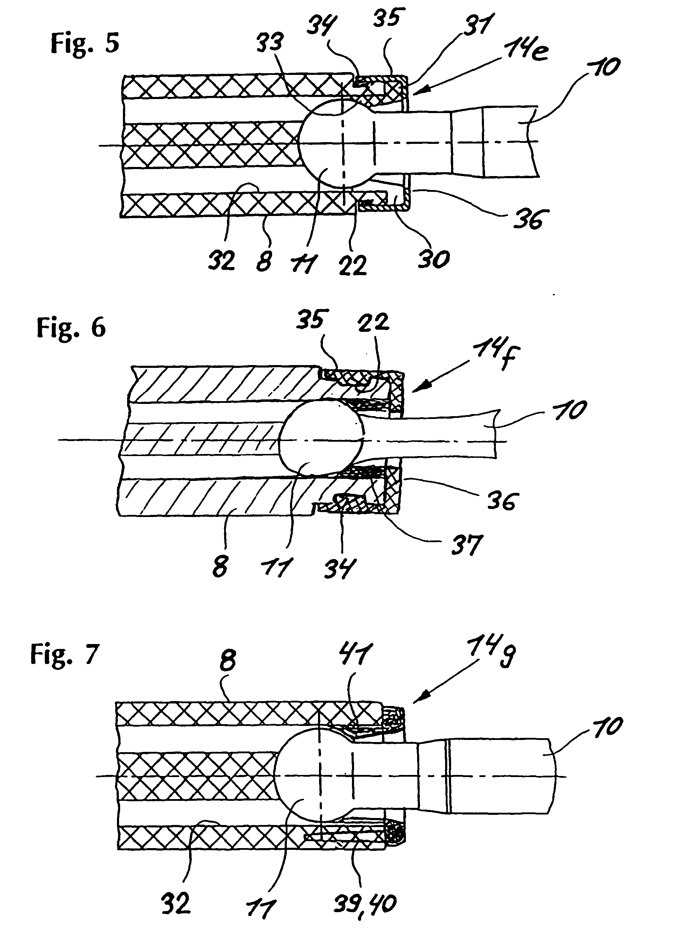

Dem Halteglied 14e gemäß Figur 5 ist eine Kalottenhülse 30 zugeordnet, die sich über einen Bord 31 an der Stirnseite vom Kolben 8 abstützt. Ein axial ausgerichteter Bund 33 der Kalottenhülse 30 ist an der Kolbenwandung 32 zentriert und dient zur Abstützung des Kugelkopfes 11 der Kolbenstange 10. Als Halteglied 14e dient ein Blechgehäuse mit einer zentrischen Bohrung im Boden 36, das den Bord 31 der Kalottenhülse 30 umschließt und das über Rastnasen 34 am freien Ende des Axialabschnitts 35 verfügt, die in einer Radialnut 22 im Kolben 8 rastiert sind. Zur Montage über den Kugelkopf 11 ist die Kalottenhülse 30 geschlitzt, vorzugsweise meanderförmig geschlitzt.

Das Halteglied 14f aus Figur 6, vergleichbar dem Halteglied 14e aus Figur 5, ist außen am Kolben 8 befestigt und einer rohrförmigen Kalottenhülse 37 zugeordnet, die sich mit einem Ende am Kugelkopf 11 und gegenüberliegend an dem Boden 36 vom Halteglied 14f abstützt.

In Figur 7 ist das Halteglied 14g dargestellt, das eine an der Stirnseite des Kolbens 8 anliegende Scheibe umfaßt. Diese Scheibe ist mit umfangsverteilt axial ausgerichteten Zapfen 39 versehen, die in entsprechende Ausnehmungen 40 des Kolbens 8 eingreifen, wobei zur Erzielung einer unlösbaren Verbindung zwischen dem Halteglied 14g und dem Kolben 8 eine Verklebung oder UItraschallschweißung vorgesehen ist. Radial versetzt zu den Zapfen 39 ist das Halteglied 14g mit einem axial ausgerichteten Bund 41 versehen, die am Kugelkopf 11 der Kolbenstange 10 abgestützt sind.

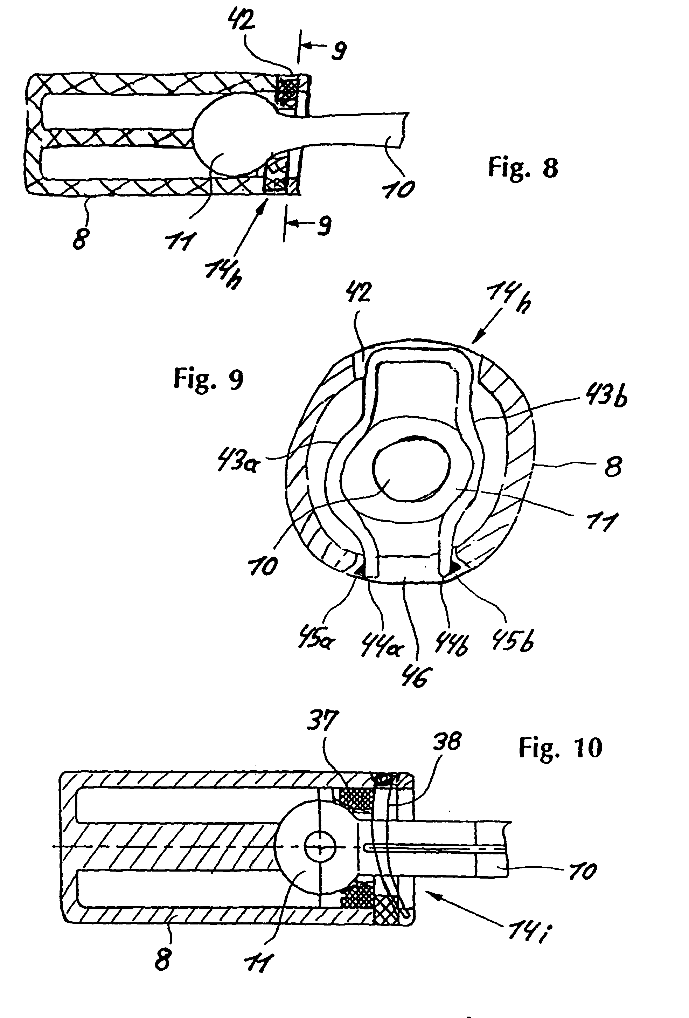

Die Vielfalt der erfindungsgemäßen Halteglieder unterstreichend zeigt die Figur 8 die Anordnung einer radial in den Kolben 8 eingeführten Formfeder, zur Bildung des Haltegliedes 14h. In der Einbaulage ist der Kugelkopf 11 der Kolbenstange 10 unmittelbar an der Formfeder abgestützt. Zur Vermeidung einer unmittelbaren Anlage der Formfeder am Kugelkopf 11 schließt die Erfindung ebenfalls einen axialen Versatz vor, bei dem eine Kalottenhülse 37 gemäß Figur 6 zwischen dem Kugelkopf 11 und dem Halteglied 14h eingesetzt ist.

In Figur 9 ist die Ausgestaltung und Einbaulage des Haltegliedes 14h verdeutlicht. Die das Halteglied 14 h bildende Formfeder besitzt danach eine weitestgehend U-förmige Ausgestaltung, deren Schenkel 43a, 43b im Bereich des Kugelkopfes 11 eine der Außenkontur des Kugelkopfes 11 entsprechende Formgebung aufweisen, an die sich ein paralleler Endabschnitt anschließt. Die freien Enden der Schenkel 43a, 43b sind versehen mit Rastnasen 44a, 44b, die in der Einbaulage an Vorsprüngen 45a, 45b der Öffnung 46 im Kolben 8 verrasten.

Ein weiteres Ausführungsbeispiel der Erfindung zeigt die Figur 10, in der das Halteglied 14i als eine Drahtspange ausgebildet ist, die zur Erzielung einer Axialkraft auf den Kugelkopf 11 unter Vorspannung in den Kolben 8 eingesetzt ist. Dabei sind die Schenkel 38 der Drahtspange derart gestaltet, daß diese in der Einbaulage eine Axialkraft auf die Führungshülse 37 ausüben.

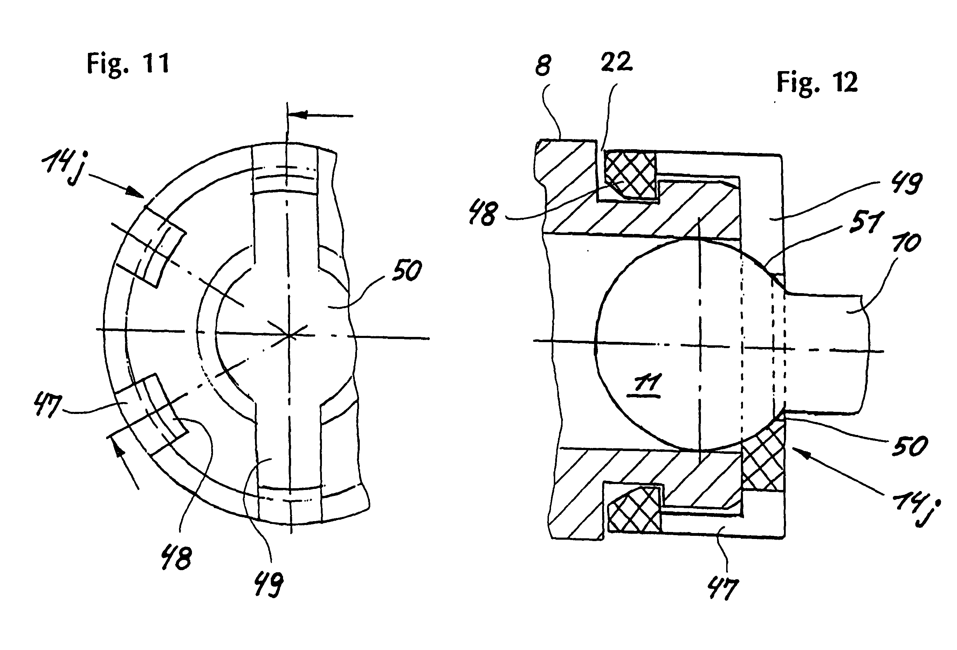

Aus den Figuren 11 und 12 ist das Halteglied 14j zu entnehmen, das ein Kunststoffbauteil in einer Scheibenkontur darstellt, die in Kolbenrichtung umfangsverteilt axial vorspringende Zungen 47 umfaßt, welche endseitig Rastnasen 48 aufweisen. Zur Montage verfügt das Halteglied 14j über eine Aussparung 49, die sich von der zentrischen Ausnehmung 50 bis zu zwei gegenüberliegenden Zungen 47 erstreckt. Damit ist es möglich, durch Spreizung der lediglich über die Rastnasen 48 verbundenen Hälften des scheibenförmigen Haltegliedes 14j diese bei der Montage über den Kugelkopf 11 zu stülpen. Das Halteglied 14j verfügt weiterhin im Bereich der zentrischen Ausnehmung 50 über eine Randzone 51, die der Formgebung des Kugelkopfes 11 angepaßt ist. In der Einbaulage des Haltegliedes 14j, siehe Figur 12, greifen die Rastnasen 48 in die Radialnut 22 des Kolbens 8 ein und bilden eine Schnappverbindung.

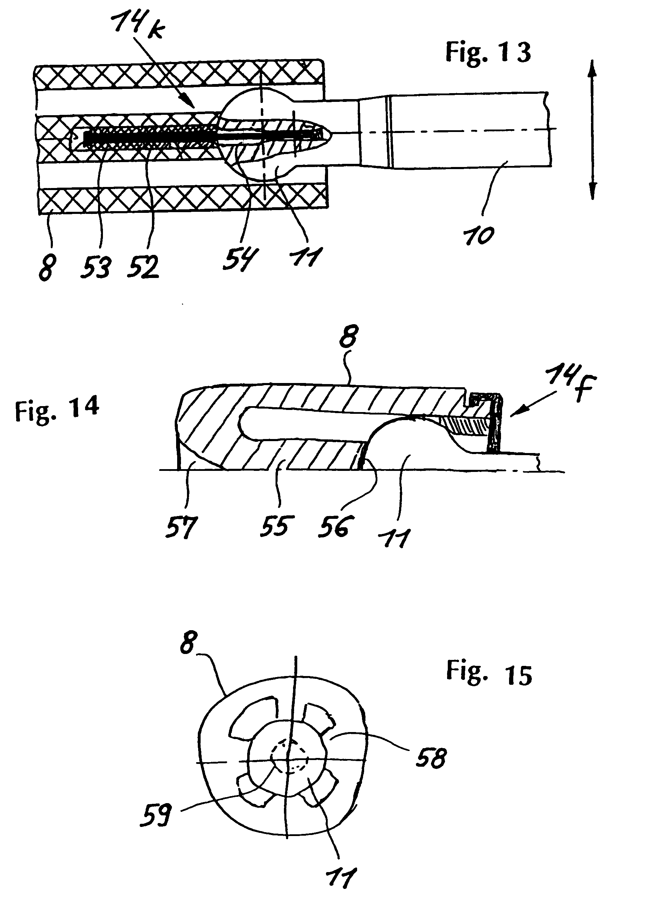

Die Figur 13 zeigt das Halteelement 14k, ausgebildet als eine Speiche 52, die mit einem Ende in eine zentrisch im Kolben 8 eingesetzte Spannhülse 53 gehalten und gegenseitig unlösbar im Kugelkopf 11 der Kolbenstange 10 befestigt ist. Zur Erzielung einer Schwenkbarkeit (siehe Doppelpfeil) ist der Speiche 52 im Kugelkopf 11 versetzt vom Befestigungsende ein Freiraum 54 zugeordnet, der einen für die Betätigung des Geberzylinders erforderlichen Schwenkbereich der Kolbenstange 10 ermöglicht.

Aus den Figuren 14 und 15 sind Beispiele für eine optimale Gestaltung von durch Spritzgießverfahren hergestellte Kolben aus Kunststoff zu entnehmen, die mit den erfindungsgemäßen Haltegliedern 14a bis 14k kombinierbar sind. Die Figur 14 zeigt einen vorzugsweise aus Duroplast hergestellten Kolben 8, der zentrisch einen Stempel 55 mit einer kalottenartigen Aufnahme 56 aufweist, an dem sich die Kolbenstange 10 über den Kugelkopf 11 abstützt. Zur Vereinfachung des Spritzgießverfahrens verfügt der Kolben 8 druckraumseitig über einen zentrischen Trichter 57. Alternativ dazu ist in Figur 15 der Kolben 8 mit 4 symmetrisch angeordneten Stegen 58 versehen, die sich mittig im Kolben zu einem im Vergleich zu Figur 15 kleiner dimensionierten Stempel 59 vereinen. Zur Schaffung einer Aufnahme, die dem Kugelkopf 11 entspricht bilden alle Stege 58 sowie der Stempel 59 eine Kalotte.

### Bezugszahlenliste

- 1: Geberzylinder
- 2: Gehäuse
- 3: Druckraum
- 4: Druckanschluß
- 5: Leitungsstutzen
- 6: Gehäuse
- 7: Längsbohrung
- 8: Kolben
- 9a: Nutringdichtung
- 9b: Nutringdichtung
- 10: Kolbenstange
- 11: Kugelkopf
- 12: Aufnahme
- 13: Anlenkung
- 14a: Halteglied
- 14b: Halteglied
- 14c: Halteglied
- 14d: Halteglied
- 14e: Halteglied
- 14f: Halteglied
- 14g: Halteglied
- 14h: Halteglied
- 14i: Halteglied
- 14j: Halteglied
- 14k: Halteglied
- 15: Kolbenmantelfläche
- 16: Schnappverbindung
- 17: Drahtspange
- 18: Steg
- 19: Ausnehmung
- 20: Ansatz
- 21: Wulst
- 22: Radialnut
- 23: Bereich
- 24: Bördelung
- 25: Bord
- 26: Einführzone
- 27: Radialnut
- 28: Rastnase
- 29: Kröpfung
- 30: Kalottenhülse
- 31: Bord
- 32: Kolbenwandung
- 33: Bund
- 34: Rastnase
- 35: Axialabschnitt
- 36: Boden
- 37: Kalottenhülse
- 38: Schenkel
- 39: Zapfen
- 40: Ausnehmung
- 41: Bund
- 42: Öffnung
- 43a: Schenkel
- 43b: Schenkel
- 44a: Rastnase
- 44b: Rastnase
- 45a: Vorsprung
- 45b: Vorsprung
- 46: Öffnung
- 47: Zunge
- 48: Rastnase
- 49: Aussparung
- 50: Ausnehmung
- 51: Randzone
- 52: Speiche
- 53: Spannhülse
- 54: Freiraum
- 55: Stempel
- 56: Aufnahme
- 57: Trichter
- 58: Steg
- 59: Stempel
- 60a: Endabschnitt
- 60b: Endabschnitt
- 61a: Abschnitt
- 61b: Abschnitt

## Patentansprüche

1. Geberzylinder für hydraulisch betätigte Kupplungs- oder Bremssysteme von Kraftfahrzeugen, umfassend ein hohlzylindrisches Gehäuse (2, 6), einen im Gehäuse (2) ausgebildeten Druckraum (3), einen in dem Druckraum (3) axial verschiebbar angeordneten Kolben (8), an dessen vom Druckraum (3) abgewandten Ende ein Kugelkopf (11) einer Kolbenstange (10) schwenkbar befestigt ist, **dadurch gekennzeichnet, daß** zur Befestigung der Kolbenstange (10) an dem aus Kunststoff hergestellten Kolben (8) ein die Kolbenstange (10) und den Kolben (8) umgreifendes, am Kolben (8) befestigtes Halteglied (14a bis 14k) vorgesehen ist, das in einer Einbaulage eine auf den Kugelkopf (11) gerichtete Haltekraft ausübt.

2. Geberzylinder nach Anspruch 1, **dadurch gekennzeichnet, daß** ein spanlos aus Blech hergestelltes Halteglied (14b, 14c) vorgesehen ist, das, von einer zentrischen Öffnung für die Kolbenstange (10) ausgehend, einen Kugelabschnitt bildet, der einen stimseitig aus dem Kolben (8) austretenden Bereich des Kugelkopfes (11) bereichsweise umschließt, und daß sich an den Kugelabschnitt ein radialer, eine Stirnseite des Kolbens (8) umschließender Bereich anschließt, der in einen Axialabschnitt übergeht, welcher endseitig mit einer radial nach innen weisenden Wulst (21) oder Bördelung (24) in eine Radialnut (22) des Kolbens (8) verrastet.

3. Geberzylinder nach Anspruch 2, **dadurch gekennzeichnet, daß** der am Kugelkopf (11) anliegende Kugelabschnitt des Halteglieds (14c) mit Längsschlitzen versehen ist und am freien Ende einen radial nach außen gerichteten Bord (25) aufweist, der eine nach außen offene, umlaufende und nahezu halbkreisförmig gestaltete Einführzone (26) bildet.

4. Geberzylinder nach Anspruch 1, **gekennzeichnet durch** ein topfförmig gestaltetes, spanlos aus Blech geformtes Halteglied (14e, 14f) für einen vollständig vom Kolben (8) umschlossenen Kugelkopf (11), mit einem Boden (36) an den sich ein den Kolben (8) begrenzt umschließender Axialabschnitt (35) anschließt, der über eine Rastnase (34) in eine Radialnut (22) verrastet und an dem Boden (36) sich eine den axialen Abstand zum Kugelkopf (11) überbrükkende Kalottenhülse (30, 37) abstützt.

5. Geberzylinder nach Anspruch 1, **dadurch gekennzeichnet, daß** als Halteglied (14a) eine Drahtspange (17) oder Formfeder vorgesehen ist, die mit zwei der Kugelkopfkontur angepaßten Abschnitten (61a, 61b) an einer Stirnseite des Kolbens (8) anliegt, deren Endabschnitte (60a, 60b) jeweils rechtwinkelig in Richtung des Kolbens (8) zeigend abgewinkelt und über einen Steg (18) verbunden sind, wobei jeder Steg (18) in eine Ausnehmung (19) des Kolbens (8) eingreift und dabei mit einem radialen Ansatz (20) des Kolbens (8) eine Schnappverbindung (16) bildet.

6. Geberzylinder nach Anspruch 1, **dadurch gekennzeichnet, daß** das Halteglied (14h) als eine Schnappfeder oder Formfeder gestaltet ist, deren Schenkel (43a, 43b) in einer radial angeordneten Öffnung (42) des Kolbens (8) geführt sind und die Kolbenstange (10) über den Kugelkopf (11) unmittelbar an den Schenkeln (43a, 43b) anliegt.

7. Geberzylinder nach Anspruch S, **dadurch gekennzeichnet, daß** eine U-förmige Formfeder als Haltemittel (14h) vorgesehen ist, deren Schenkel (43a, 43b) im Bereich einer Kontaktfläche am Kugelkopf (11) bauchig gestaltet sind und die Schenkel (43a, 43b) an den freien Enden jeweils eine Rastnase (44a, 44b) bilden, die an Vorsprüngen (45a, 45b) in der Einbaulage verrasten.

8. Geberzylinder nach Anspruch 4, **gekennzeichnet durch** ein Halteglied (14g), ausgebildet als eine an der Stirnseite des Kolbens (8) abgestützte Scheibe, die axial ausgerichtete Zapfen (39) umfaßt, die in Ausnehmungen (40) des Kolbens (8) befestigt sind und wobei die Scheibe weiterhin über einen an der Kolbenwandung (32) zentrierten Bund (41) verfügt, an denen der Kugelkopf (11) abgestützt ist.

9. Geberzylinder nach Anspruch 4, **dadurch gekennzeichnet, daß** zwischen dem Halteglied (14e, 14f) und dem Kugelkopf (11) eine vorzugsweise aus Kunststoff hergestellte geschlitzte Kalottenhülse (30, 37) eingesetzt ist, die mit einer der Außenkontur des Kugelkopfes (11) angepaßten Anlagefläche versehen ist.

10. Geberzylinder nach Anspruch 1, **gekennzeichnet durch** eine als Halteglied (14j) gestaltete Kunststoffscheibe, die, an der Kolbenstimseite abgestützt, am Umfang verteilt axial vorstehende Zungen (47) aufweist, welche am freien Ende eine radial nach innen gerichtete Rastnase (48) aufweisen, die in der Einbaulage formschlüssig in die Radialnut (22) des Kolbens (8) verrasten.

11. Geberzylinder nach Anspruch 1, **dadurch gekennzeichnet, daß** der Kolben (8) an dem zur Kolbenstange (10) gerichteten Ende zur Aufnahme von Befestigungsmitteln der Halteglieder (14b, 14c, 14e, 14f, 14j) eine radial abgesetzte Mantelfläche aufweist.

## Claims

1. A master cylinder for hydraulically actuated clutch and braking systems of motor vehicles, comprising a hollow-cylindrical housing (2, 6), a pressure chamber (3) formed in the housing (2), a piston (8) arranged so as to be axially displaceable in the pressure chamber (3), a spherical head (11) of a piston rod (10) being fixed in a swivelling manner to the end of said piston facing away from the pressure chamber (3),
**characterised in that**,
in order to fix the piston rod (10) to the piston (8) produced from plastic, there is provided a holding element (14a to 14k) fixed to the piston (8) and encompassing the piston rod (10), said holding element exerting in a fitted position a holding force directed onto the spherical head (11).

2. The master cylinder according to claim 1,
**characterised in that**
a holding element (14b, 14c) produced from sheet metal without cutting is provided, which holding element, proceeding from a centred opening for the piston rod (10) , forms a spherical segment, which encompasses in zones a region of the spherical head (11) emerging at the end face from the piston (8), and that the spherical segment is followed by a radial region encompassing an end face of the piston (8), said radial region changing into an axial segment, which latches into a radial groove (22) of the piston (8) at the end with a bulge (21) or flange (24) pointing radially inwards.

3. The master cylinder according to claim 2,
**characterised in that**
the spherical segment of the holding element (14c) adjacent to the spherical head (11) is provided with longitudinal slots and has at the free end an edge (25) pointing radially outwards, which forms an outwardly open, peripheral lead-in zone (26) designed virtually semicircular.

4. The master cylinder according to claim 1,
**characterised by**
a holding element (14e, 14f) for a spherical head (11) that is completely encompassed by the piston (8), said holding element being designed pot-shaped and formed from sheet metal without cutting, with a bottom (36) which is followed by an axial segment (35) encompassing the piston (8) to a limited extent, which axial segment latches via a latch nose (34) into a radial groove (22) and a cap-shaped sleeve (30, 37) bridging the axial distance to the spherical head (11) rests on the bottom (36).

5. The master cylinder according to claim 1,
**characterised in that**
there is provided as the holding element (14a) a wire clasp (17) or profiled spring, which with two segments (61a, 61b) adapted to the spherical head contour lies adjacent to an end face of the piston (8), the end segments (60a, 60b) whereof are each bent off at right angles pointing in the direction of the piston (8) and are connected by a web (18), whereby each web (18) engages in a cut-out (19) of the piston (8) and thereby forms a snap connection (16) with a radial shoulder (20) of the piston (8).

6. The master cylinder according to claim 1,
**characterised in that**
the holding element (14h) is designed as a catch spring or a profiled spring, whose legs (43a, 43b) are guided in a radially disposed opening (42) of the piston (8) and the piston rod (10) via the spherical head (11) lies immediately adjacent to the legs (43a, 43b).

7. The master cylinder according to claim 5,
**characterised in that**
a U-shaped profiled spring is provided as the holding element (14h), the legs (43a, 43b) of which profiled spring are designed bulging in the region of a contact area on the spherical head (11) and the legs (43a, 43b) each form at the free ends a latch nose (44a, 44b) which latches onto projections (45a, 45b) in the fitted position.

8. The master cylinder according to claim 4,
**characterised by**
a holding element (14g) designed as a disc supported on the end face of the piston (8), which disc includes axially orientated pegs (39) which are fixed into cutouts (40) of the piston (8), and whereby the disc further has a collar (41) centred at the piston wall (32), on which collar the spherical head (11) is supported.

9. The master cylinder according to claim 4,
**characterised in that**
a slotted cap-shaped sleeve (30, 37) preferably produced from plastic is inserted between the holding element (14e, 14f) and the spherical head (11), said cap-shaped sleeve being provided with a contact surface adapted to the external contour of the spherical head (11).

10. The master cylinder according to claim 1,
**characterised by**
a plastic disc designed as a holding element (14j), said plastic disc, supported on the end face of the piston, having axially projecting tongues (47) distributed on the periphery, which tongues have at the free end a latch nose (48) pointing radially inwards, which in the fitted position latches in a keyed manner into the radial groove (22) of the piston (8).

11. The master cylinder according to claim 1,
**characterised in that**
the piston (8), at the end pointing towards the piston rod (10), has a radially stepped lateral surface to accommodate fixing means for the holding elements (14b, 14c, 14e, 14f, 14j).

## Revendications

1. Maître-cylindre pour des systèmes d'embrayage ou de freinage - actionnés hydrauliquement - de véhicules automobiles, comprenant un carter cylindrique creux (2, 6), un espace sous pression (3) formé dans le carter (2), un piston (8) disposé en étant mobile axialement dans l'espace sous pression (3), piston sur l'extrémité duquel, placée à l'opposé de l'espace sous pression (3), est fixée de façon pivotante une tête sphérique (11) d'une tige de piston (10),
**caractérisé en ce qu'**il est prévu, pour la fixation de la tige de piston (10) sur le piston (8) fabriqué en matière plastique, un élément de retenue (14a à 14k) fixé sur le piston (8) et entourant la tige de piston (10) et le piston (8), lequel élément de retenue, dans une position de montage, exerce une force de retenue dirigée sur la tête sphérique (11).

2. Maître-cylindre selon la revendication 1, **caractérisé en ce qu'**il est prévu un élément de retenue (14b, 14c) fabriqué en tôle, sans usinage par enlèvement de copeaux, lequel élément de retenue, en partant d'une ouverture centrale pour la tige de piston (10), forme une partie sphérique qui entoure, par zones, une zone de la tête sphérique (11) sortant du piston (8), côté frontal, et **en ce qu'**une zone radiale, entourant un côté frontal du piston (8), fait suite à la partie sphérique, laquelle zone passe dans une partie axiale qui, côté extrémité, par un renf lement (21) ou par un bord tombé (24) tourné vers l'intérieur, dans le sens radial, s'encliquète dans une rainure radiale (22) du piston (8).

3. Maître-cylindre selon la revendication 2, **caractérisé en ce que** la partie sphérique de l'élément de retenue (14c), s'appuyant sur la tête sphérique (11), est dotée de fentes longitudinales et présente, au niveau de l'extrémité libre, un bord (25) tourné vers l'extérieur, dans le sens radial, lequel bord forme une zone d'introduction (26) ouverte vers l'extérieur, circulaire et configurée en ayant à peu près une forme de demi-cercle.

4. Maître-cylindre selon la revendication 1, **caractérisé par** un élément de retenue (14e, 14f), en tôle, configuré en forme de pot et formé par usinage sans enlèvement de copeaux, pour une tête sphérique (11) entourée complètement par le piston (8), comprenant un fond (36) auquel fait suite une partie axiale (35) entourant de façon limitée le piston (8), laquelle partie axiale, par un ergot de verrouillage (34), s'encliquète dans une rainure radiale (22), et un manchon (30, 37) en forme de calotte, enjambant l'espacement axial par rapport à la tête sphérique (11), est en appui sur le fond (36).

5. Maître-cylindre selon la revendication 1, **caractérisé en ce qu'**il est prévu, servant d'élément de retenue (14a), une boucle en fil métallique (17) ou un ressort de forme qui est en appui sur un côté frontal du piston (8), par deux parties (61a, 61b) adaptées au contour de la tête sphérique, dont les parties d'extrémités (60a, 60b) sont respectivement coudées à angle droit en pointant dans la direction du piston (8) et reliées par une nervure (18), où chaque nervure (18) s'engage dans un évidement (19) du piston (8) et, ce faisant, forme, avec un épaulement radial (20) du piston (8), un assemblage à encliquetage (16) .

6. Maître-cylindre selon la revendication 1, **caractérisé en ce que** l'élément de retenue (14h) est configuré comme un ressort à déclic ou comme un ressort de forme dont les branches (43a, 43b) sont guidées dans une ouverture (42) du piston (8), disposée dans le sens radial, et la tige de piston (10), par la tête sphérique (11), est en appui directement sur les branches (43a, 43b).

7. Maître-cylindre selon la revendication 5, **caractérisé en ce qu'**il est prévu, servant d'élément de retenue (14h), un ressort de forme configuré en forme de U, dont les branches (43a, 43b) sont configurées en étant renflées dans la zone d'une surface de contact sur la tête sphérique (11), et les branches (43a, 43b) forment respectivement, au niveau des extrémités libres, un ergot de verrouillage (44a, 44b) qui, en position de montage, s'encliquète sur des parties saillantes (45a, 45b).

8. Maître-cylindre selon la revendication 4, **caractérisé par** un élément de retenue (14g) configuré comme un disque supporté sur le côté frontal du piston (8), lequel disque comprend des tourillons (39), alignés axialement, qui sont fixés dans des évidements (40) du piston (8), et où le disque dispose en outre d'un bord (41) centré sur la paroi du piston (32), évidements sur lesquels est supportée la tête sphérique (11).

9. Maître-cylindre selon la revendication 4, **caractérisé en ce qu'**un manchon fendu (30, 37), en forme de calotte, fabriqué de préférence en matière plastique, est introduit entre l'élément de retenue (14e, 14f) et la tête sphérique (11), lequel manchon en forme de calotte est doté d'une surface d'appui adaptée au contour extérieur de la tête sphérique (11).

10. Maître-cylindre selon la revendication 1, **caractérisé par** un disque en matière plastique configuré comme un élément de retenue (14j), lequel disque en matière plastique, supporté sur le côté frontal du piston, présente des languettes saillantes (47) réparties axialement sur la circonférence, lesquelles languettes présentent, au niveau de l'extrémité libre, un ergot de verrouillage (48) tourné vers l'intérieur, dans le sens radial, lequel ergot de verrouillage, en position de montage, s'encliquète, par sûreté de forme, dans la rainure radiale (22) du piston (8).

11. Maître-cylindre selon la revendication 1, **caractérisé en ce que** le piston (8) présente, au niveau de l'extrémité tournée vers la tige de piston (10), une surface d'enveloppe décalée radialement, servant au logement de moyens de fixation des éléments de retenue (14b, 14c, 14e, 14f, 14j).
